# EUROPEAN PATENT SPECIFICATION

(11) **EP 1 546 569 B1**
(45) Date of publication and mention of the grant of the patent: **17.12.2008**
(21) Application number: 03793995.6
(22) Date of filing: 29.08.2003
(51) Int. Cl.: F16D 48/06

(54) **PEDAL OPERATED ACTUATION SYSTEM ASSISTED BY AN ELECTRICAL MOTOR**
DURCH EINEN ELEKTROMOTOR UNTERSTÜTZTES PEDALBETÄTIGTES BETÄTIGUNGSSYSTEM
SYSTEME D'ACTIONNEMENT PAR PEDALE ASSISTE PAR UN MOTEUR ELECTRIQUE

(30) Priority: 06.09.2002 GB 0220695; 09.04.2003 GB 0308145
(43) Date of publication of application: 29.06.2005
(60) Divisional application: 08014102.1
(73) Proprietor: LuK Lamellen und Kupplungsbau Beteiligungs KG, 77815 Bühl (DE)
(72) Inventor: PICHOT, Sebastien, F-45380 La Chapelle Saint Mesmin (FR); DESBOIX, Patrick, F-45160 Olivet (FR)
(86) International application number: PCT/IB2003/003826
(87) International publication number: WO 2004/022995

(56) References cited:
- GB-A- 2 236 153
- US-A- 4 395 883
- US-A- 5 579 882

## Description

This invention relates to actuation systems and in particular, to pedal operated fluid pressure (e.g. hydraulic) actuation systems for a variety of uses such as the operation of a vehicle clutch or brake system where the vehicle driver is required to apply significant pedal effort to operate the function controlled by the pedal.

Problems arise when the pedal load, which the operator must apply, becomes excessive since this leads to driver fatigue. Thus, in modern vehicles there is an ever-increasing requirement to lower pedal loads associated with the operation of vehicle clutches and brakes.

GB 2 236 153 A and US 4, 395,883 (represents the closest known prior art) disclose pushrods of master cylinders, which are connected with electric motors to assist the movement of the piston dependent on the pedal position/movement.

It is the object of the present invention to develop these solutions for a pedal operated actuation system.

Thus, according to the present invention there is provided a fluid pressure actuation system in which a piston moves in a master cylinder bore und the operation of a pedal to displace hydraulic fluid from the bore to actuate a function, a sensor senses the position/movement of the pedal, an electrical actuator is directly, mechanically connected with the pedal or another component connected with the piston of the master cylinder, and an electrical control means is provided which receives signals from the sensor and applies a controlled output to the electrical actuator to provide direct mechanical assistance to the movement of the piston dependent on the pedal position/movement, a tooth quadrant is connected with the pedal, which is engaged by a gear wheel driven by an electrical actuator in the form of an electric motor, which is controlled by the electrical control means.

In such an arrangement, the piston of the master cylinder receives both the manual foot input of the vehicle operator and also the direct mechanical assistance of the electric motor as it moves along the master cylinder.

The level of direct assistance provided to the movement of the piston within the master cylinder bore may be arranged to be varied dependent on the position of the operating pedal. This enables the pedal load experienced by the vehicle operator to be varied or to be kept substantially constant depending on the wishes of the vehicle manufacturer.

Also, the electrical actuator is preferably a brushless motor which has the advantage, as explained below, that the torque provided by the motor can always be in the same direction no matter, in which direction the pedal is moving. This enables the vehicle manufacturer to vary the load seen at the pedal by the vehicle operator in accordance with any desired specification.

Two examples of pedal operated actuation systems in accordance with the present invention will now be described, by way of example only, with reference to the accompanying drawings in which:
Figure 1 shows diagrammatically an arrangement in which a hydraulic master cylinder is provided with direct mechanical assistance by an electric motor, which operates on the master cylinder operating pedal, and
Figure 2 shows a pedal operated actuation system in which a hydraulic master cylinder is assisted by an electrical actuator which operates on a rod extending from the opposite end of the master cylinder from a pedal actuated push-rod.

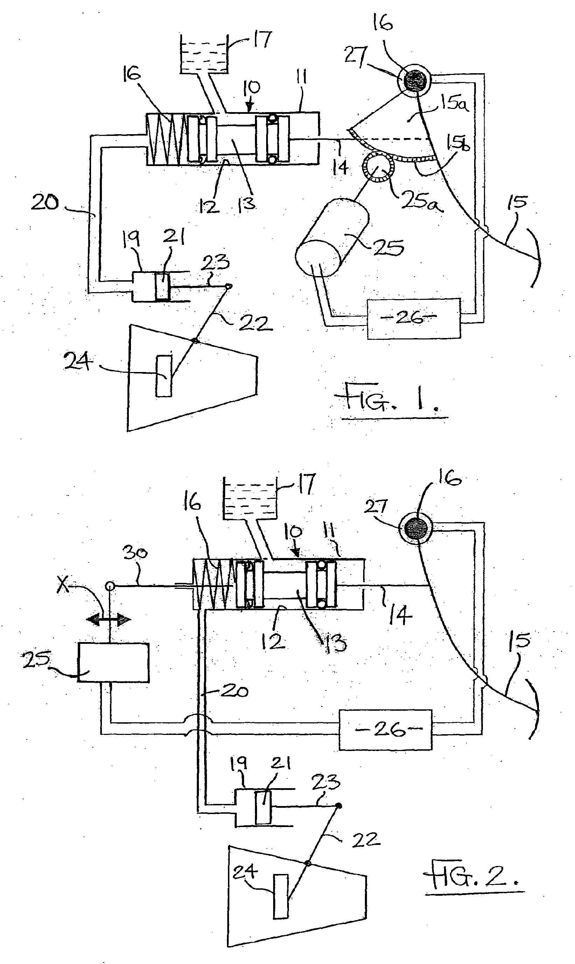

Referring to Figure 1, the actuation system comprises a hydraulic master cylinder 10 having a body 11 with an internal bore 12 in which a piston 13 is slideable. The piston is displaced axially within the bore 12 by a push-rod 14 which is connected with an actuation pedal 15 which is pivoted on a pin 16. The master cylinder 10 has, in a conventional manner, a reservoir 17 which is connected with bore 12 when the piston 13 is in a fully retracted position. This allows recuperation of fluid into the bore 12 in a conventional manner via passages and valving (not shown) in piston 13. A suitable form of master cylinder is shown for example in the Applicant's published UK patent application No. GB 2349191A. As will be appreciated, since the present invention is not concerned with the hydraulic details of the master cylinder, any type of master cylinder could be used.

The piston is displaceable in bore 12 against a return spring 18 to operate a slave cylinder 19 via a conduit 20. The slave cylinder in turn has a piston 21 which operates a clutch release lever 22 via a push rod 23. The clutch release lever operates a clutch release bearing 24 in a conventional manner.

As will be appreciated, instead of the external type of slave cylinder 19 illustrated a concentric type of slave cylinder could also be used.

Thus by depressing pedal 15 piston 13 is moved to the left as shown in Figure 1, which in turn moves the slave cylinder piston 21 to the right causing the clutch release bearing 24 to move to the left and release the associated clutch (not shown) in the conventional manner.

In accordance with the present invention, a quadrant 15a is secured to pedal 15 having gear teeth 15b formed along the curved edge thereof. An electrical actuator in the form of an electric motor 25 is provided. The motor drives a gear wheel 25a which meshes with teeth 15b.

The motor at 25 is controlled by an electrical control circuit shown diagramatically at 26 which also receives input signals from a rotary potentiometer 27 which surrounds the pedal mounting pin 16 and provides signals to control system 26 which can indicate both the actual position of pedal 15 and its speed of movement etc. Instead of rotary potentiometer 27 any other suitable form of pedal sensor could be used. For example, the sensor could be of the linear type and could operate without contact being, for example, an optical sensor.

The electrical motor 25 is thus arranged to provide an assisting torque to pedal 15 the value of which is arranged to be dependent on the position and/or speed of movement of the pedal 15.

For example, the assisting torque provided by motor 25 can be arranged to be substantially constant after the angle of depression of the pedal 15 exceeds a pre-determined value. Alternatively, the torque may be varied dependent on the angle which the pedal 15 has been pressed through. In yet a further variation the speed of movement of pedal 15 can be used to provide a further control over the level of torque provided by motor 25.

Figure 2 shows an alternative arrangement (not in the scope of the claims) in which components of a similar function to those shown in Figure 1 have been similarly numbered. In the Figure 2 arrangement, the master cylinder 10 has a second rod 30 extending from the opposite end thereof to push rod 14. The electrical actuation means 25 is connected with rod 30 (e.g. via a worm drive) and provides assistance to the movement of piston 13 (as indicated by arrows X) within bore 12 under the control of electrical control circuit 26. Alternatively actuation means 25 could operate directly on push rod 14 again via, for example, a worm drive.

The electrical actuator 25 may be an electric motor or could be an electric coil which surrounds rod 30 to provide an attraction or repulsion force to vary the torque which the vehicle operator needs to apply to the pedal 15 in order to operate the master cylinder.

As indicated above, where the electrical actuation means 25 is an electric motor this could be, and indeed preferably is, a brushless motor.

During actuation of pedal 15 the pedal movement is downwards and the assistance provided by the motor 25 also assists the downward movement of the pedal. When the pedal is being released, the motor is still required to apply a downward torque to the pedal to avoid a high upward load on the pedal. Also, if the pedal is held in a fixed position, the motor must maintain the torque applied to the pedal constant even when movement of the pedal has stopped. A conventional DC motor cannot provide the above functionality where the direction of the assistance is always downward no matter in which direction the pedal 15 is rotating or whether the pedal is held in a fixed position. A brushless motor can do this.

The present invention thus provides an actuation system in which the hydraulic actuation force is assisted by the direct mechanical connection of an electrical actuator to the pedal or to another component connected with the piston of the hydraulic master cylinder. Such an actuation system is particularly suitable for the actuation of a vehicle clutch.

## Claims

1. A fluid pressure actuation system, in which a piston (13) moves in a master cylinder bore (12) under the operation of a pedal (15) to displace hydraulic fluid from the bore (12) to actuate a function a sensor (27) senses the position/movement of the pedal (15), an electrical actuator (25) is directly mechanically connected with the pedal (15) or another component connected with the piston (13) of the master cylinder (10), and an electrical control means (26) is provided, which receives signals from the sensor (27) and applies a controlled output to the electrical actuator (25) to provide direct mechanical assistance to the movement of the piston (13) dependent on the pedal (15) position/movement, a tooth quadrant (15a) is connected with the pedal (15), which is engaged by a gear wheel (25a) driven by an electrical actuator (25) in the form of an electric motor, which is controlled by the electrical control means (26).

2. An actuation system according to claim 1, in which the level of assistance provided by the electrical actuator (25) varies in a manner dependent on the position of the pedal (15).

3. An actuation system according to claim 2, in which the level of resistance is varied in dependence on the angle, through which the pedal (15) (15) has been depressed.

4. An actuation system according to claim 2, in which the assistance is substantially constant after the angle of depression exceeds a pre-determined value.

5. An actuation system according to claim 1, in which the level of assistance provided by the electrical actuator (25) varies in a manner dependent on the speed of movement of the pedals (15).

6. An actuation system according to any one of claims 1 to 5, in which the electrical actuator (25) is a brushless electric motor.

7. An actuation system according to any one of claims 1 to 6 for the operation of a vehicle clutch.

8. An actuation system according to any one of claims 1 to 7 for the operation of a vehicle brake.

## Patentansprüche

1. Fluiddruckbetätigungssystem, bei dem sich ein Kolben (13) in einer Geberzylinderbohrung (12) unter der Betätigung eines Pedals (15) bewegt, um Hydraulikfluid aus der Bohrung (12) zur Betätigung einer Funktion zu verdrängen, ein Sensor (27) die Position/Bewegung des Pedals (15) erfasst, ein elektrisches Stellglied (25) direkt mechanisch mit dem Pedal (15) oder einer anderen mit dem Kolben (13) des Geberzylinders (10) verbundenen Komponente verbunden ist und ein elektrisches Steuermittel (26) vorgesehen ist, das Signale vom Sensor (27) empfängt und das elektrische Stellglied (25) mit einer gesteuerten Ausgabe beaufschlagt, um die Bewegung des Kolbens (13) direkt mechanisch zu unterstützen, je nach der Position/Bewegung des Pedals (15), wobei ein Zahnbogen (15a) mit dem Pedal (15) verbunden ist, der von einem Zahnrad (25a) in Eingriff genommen wird, das von einem elektrischen Stellglied (25) in der Form eines Elektromotors angetrieben wird, das durch das elektrische Steuermittel (26) gesteuert wird.

2. Betätigungssystem nach Anspruch 1, wobei das Niveau der vom elektrischen Stellglied (25) bereitgestellten Unterstützung in Abhängigkeit von der Position des Pedals (15) variiert.

3. Betätigungssystem nach Anspruch 2, wobei das Widerstandsniveau in Abhängigkeit von dem Winkel, in dem das Pedal (15) niedergedrückt worden ist, variiert.

4. Betätigungssystem nach Anspruch 2, wobei die Unterstützung im Wesentlichen konstant ist, nachdem der Niederdrückwinkel einen vorbestimmten Wert überstiegen hat.

5. Betätigungssystem nach Anspruch 1, wobei das Niveau der vom elektrischen Stellglied (25) bereitgestellten Unterstützung in Abhängigkeit von der Bewegungsgeschwindigkeit der Pedale (15) variiert.

6. Betätigungssystem nach einem der Ansprüche 1 bis 5, wobei das elektrische Stellglied (25) ein bürstenloser Elektromotor ist.

7. Betätigungssystem nach einem der Ansprüche 1 bis 6, für den Betrieb einer Fahrzeugkupplung.

8. Betätigungssystem nach einem der Ansprüche 1 bis 7, für den Betrieb einer Fahrzeugbremse.

## Revendications

1. Système d'actionnement par pression fluidique, dans lequel un piston (13) se déplace dans un alésage (12) d'un maître-cylindre sous l'action d'une pédale (15) pour déplacer du fluide hydraulique depuis l'alésage (12) pour activer une fonction, un capteur (27) détecte la position ou le mouvement de la pédale (15), un actionneur électrique (25) est connecté mécaniquement directement à la pédale (15) ou à un autre composant connecté au piston (13) du maître-cylindre (10), et un moyen de commande électrique (26) est prévu, lequel reçoit des signaux du capteur (27) et applique une sortie commandée à l'actionneur électrique (25) pour fournir une assistance mécanique directe au mouvement du piston (13) en fonction de la position ou du mouvement de la pédale (15), un quadrant denté (15a) étant connecté à la pédale (15), lequel est engagé par un pignon (25a) entraîné par un actionneur électrique (25) sous la forme d'un moteur électrique, qui est commandé par le moyen de commande électrique (26).

2. Système d'actionnement selon la revendication 1, dans lequel le niveau d'assistance fourni par l'actionneur électrique (25) varie en fonction de la position de la pédale (15).

3. Système d'actionnement selon la revendication 2, dans lequel le niveau de résistance varie en fonction de l'angle suivant lequel la pédale (15) a été enfoncée.

4. Système d'actionnement selon la revendication 2, dans lequel l'assistance est sensiblement constante après que l'angle d'enfoncement a dépassé une valeur prédéterminée.

5. Système d'actionnement selon la revendication 1, dans lequel le niveau d'assistance fourni par l'actionneur électrique (25) varie en fonction de la vitesse du mouvement de la pédale (15).

6. Système d'actionnement selon l'une quelconque des revendications 1 à 5, dans lequel l'actionneur électrique (25) est un moteur électrique sans balais.

7. Système d'actionnement selon l'une quelconque des revendications 1 à 6, destiné à faire fonctionner un embrayage d'un véhicule.

8. Système d'actionnement selon l'une quelconque des revendications 1 à 7, destiné à faire fonctionner un frein de véhicule.
